# EUROPEAN PATENT APPLICATION

(11) **EP 2 701 393 A1**
(43) Date of publication of application: **26.02.2014**
(21) Application number: 13181521.9
(22) Date of filing: 23.08.2013
(51) Int. Cl.: H04N 21/2187, H04N 21/433, H04N 21/472, H04N 21/2543, H04N 21/658, H04N 21/81, H04N 21/442

(54) **Method and apparatus for providing live program replay service**

(30) Priority: 23.08.2012 KR 20120092153
(71) Applicant: Alticast Corporation, Seoul 137-858 (KR)
(72) Inventor: Seo, Suk-Kyoung, 403-103 Incheon (KR); Hyoung, Da-Hye, 501-848 Gwangju (KR)
(74) Representative: Nederlandsch Octrooibureau

(57) **Abstract**

Disclosed are a method and apparatus for providing a replay service for an unviewed segment of a live program. An embodiment of the invention provides an apparatus for providing a replay service for an unviewed segment of a live program that includes: an unviewed-segment setting unit configured to store information on an unviewed segment of a live program; and an unviewed-segment provider unit configured to output an unviewed-segment request menu after the end of the live program and to output an unviewed segment according to information on a user selection on the menu, where the unviewed-segment request menu includes at least one of paid viewing of the unviewed segment, free viewing of the unviewed segment, replay after advertisement, and show different channel providing the live program.

## Description

### BACKGROUND

### 1. Technical Field

The present invention relates to a method and apparatus for providing a live program replay service, more particularly to a method and apparatus that can provide a program by various means when a live program could not be watched.

### 2. Description of the Related Art

As a result of active research on digital broadcast standards in recent times, broadcast signals including video, audio, and data can now be compressed into digital signals, thus allowing multiple channels, and network processing capacity has also increased, allowing bidirectional broadcast services.

Based on such improvements in the performance of the set-top box or the TV set itself as well as increases in network bandwidth, various types of services are being provided, including not only live programs, which have been provided in the past, but also various on-demand programs requested by the user.

Recent times have seen the appearance of services not only for providing movies, but services also for providing replays of live programs.

Currently, when a live program is finished, the broadcast business may convert the live program into an on-demand program and may offer the on-demand program for a fee for a particular period of time (e.g. a week after the live program is finished) and offer it for free after this period.

In spite of this service for providing replays of live programs, a user may still be faced with a level of inconvenience.

For example, if the user missed the entire live program that was provided at a particular time point, the user can watch it for a fee or for free by requesting it as an on-demand program.

Frequently, however, the user may have missed a part of a live program because the user did not know the exact broadcast time or because of some other business that needed tending.

Even in such cases, the user may have to purchase the entire on-demand program in order to watch an unviewed segment, i.e. only a part of the live program. Since the time point at which the program is made free of charge may be a week or more away from the present, the user may have to wait for a considerable amount of time in order to watch the unviewed segment free of charge.

Korean Patent Publication No. 10-2007-0081689 (Title of Invention: VOD System Linked with Broadcasting Program for Providing Watching History Information and Method Thereof) discloses a feature of storing the viewing histories of subscribers in a subscriber profile DB and providing a list based on the database when a subscriber requests an unviewed VOD content.

The above, however, does not consider a service for selectively providing only a part of a program.

### SUMMARY

To resolve the problem in the related art described above, an aspect of the invention aims to provide a method and apparatus for providing a live program replay service by which a user that did not view a part of a live program can be provided with a replay service under various options.

To achieve the objective above, an embodiment of the invention provides an apparatus for providing a replay service for an unviewed segment of a live program that includes: an unviewed-segment setting unit configured to store information on an unviewed segment of a live program; and an unviewed-segment provider unit configured to output an unviewed-segment request menu after the end of the live program and to output an unviewed segment according to information on a user selection on the menu, where the unviewed-segment request menu includes at least one of paid viewing of the unviewed segment, free viewing of the unviewed segment, replay after advertisement, and show different channel providing the live program.

The unviewed-segment provider unit can include a fee determining unit configured to determine a fee in proportion with the length of the unviewed segment.

If the user selects the paid viewing of the unviewed segment, the information on the user selection can be transmitted to a headend that is connected by a network with the apparatus. The headend can determine a fee corresponding to a length of the unviewed segment, and if a payment of the fee is completed, can transmit the unviewed segment to the apparatus.

The unviewed-segment provider unit can include a monitoring unit configured to monitor the time point at which the live program is made free of charge; and a recording unit configured to record the unviewed segment at the time point at which the live program is made free of charge.

The live program can be a series type program composed of multiple episodes, and the unviewed-segment provider unit can include an unviewed-segment output unit configured to output the recorded unviewed segment before the time point at which the next episode of the live program is provided.

If the user selects the free viewing of the unviewed segment, the information on the user selection can be transmitted to a headend that is connected by a network with the apparatus, and the headend can transmit the unviewed segment to the apparatus at the time point at which the unviewed segment is made free of charge.

The unviewed-segment provider unit can include an advertisement determining unit configured to determine at least one of a type, position, and number for the advertisement that is to be provided to the user, if the user selects the replay after advertisement.

If the user selects the replay after advertisement, the information on the user selection can be transmitted to a headend that is connected by a network with the apparatus, and the headend can determine at least one of a type, position, and number of the advertisement that is to be provided, in correspondence to the length of the unviewed segment, and can transmit the determined advertisement information to the apparatus.

The unviewed-segment provider unit can include a channel monitoring unit configured to monitor configured to monitor whether or not the unviewed segment of the live program is provided on another channel and to output a notification message if the unviewed segment is provided on another channel.

The unviewed-segment setting unit can output a user interface for setting an unviewed segment and store information on the unviewed segment by using information on a user selection on the user interface, where the user interface can include at least one of a play bar for displaying a degree of progression of the live program, one or more thumbnails, and an unviewed-segment request icon.

Another aspect of the invention provides a method for providing a replay service for an unviewed segment at a broadcast receiving device that is connected over a network with a broadcast transmission system. The method includes: storing information on an unviewed segment of a live program; outputting an unviewed-segment request menu after the end of the live program; receiving user selection information on the menu; and outputting an unviewed segment according to the user selection information, where the unviewed-segment request menu includes at least one of paid viewing of the unviewed segment, free viewing of the unviewed segment, replay after advertisement, and show different channel providing the live program.

Yet another aspect of the invention provides a method for providing a replay service for an unviewed segment at a broadcast transmission system that is connected over a network with a broadcast receiving device. This method includes: transmitting a live program to the broadcast receiving device; receiving a user's selection information for requesting an unviewed segment after the end of the live program; and extracting an unviewed segment corresponding to the user selection information and transmitting the unviewed segment to the broadcast receiving device. The user selection information includes at least one of a broadcast receiving terminal identifier, a live program identifier, unviewed segment information, and replay type information, and the replay type information includes at least one of paid viewing of the unviewed segment, free viewing of the unviewed segment, replay after advertisement, and show different channel providing the live program. Still another aspect of the invention provides a recorded medium readable by a computer that tangibly embodies a program of instructions for executing the method above.

Certain embodiments of the invention enable a user to selectively watch, according to various options, only the segment that was not viewed, thereby providing the user with greater convenience.

Additional aspects and advantages of the present invention will be set forth in part in the description which follows, and in part will be obvious from the description, or may be learned by practice of the invention.

### BRIEF DESCRIPTION OF THE DRAWINGS

FIG. 1 illustrates the composition of a system for providing broadcast services according to an embodiment of the invention.
FIG. 2 illustrates the detailed composition of a broadcast receiving device according to an embodiment of the invention.
FIG. 3A, FIG. 3B, and FIG. 3C illustrate unviewed segments resulting from changing channels according to an embodiment of the invention.
FIG. 4 illustrates a user interface for setting an unviewed segment according to an embodiment of the invention.
FIG. 5 illustrates an example screen for an unviewed-segment request menu according to an embodiment of the invention.
FIG. 6 illustrates the detailed composition of an unviewed-segment provider unit according to an embodiment of the invention.
FIG. 7 illustrates the composition of a headend according to another embodiment of the invention.

### DETAILED DESCRIPTION

As the present invention allows for various changes and numerous embodiments, particular embodiments will be illustrated in the drawings and described in detail in the written description. However, this is not intended to limit the present invention to particular modes of practice, and it is to be appreciated that all changes, equivalents, and substitutes that do not depart from the spirit and technical scope of the present invention are encompassed in the present invention. In describing the drawings, like reference numerals are used for like elements.

Certain preferred embodiments of the invention will be described below in more detail with reference to the accompanying drawings. To aid the overall understanding of the invention, those components that are the same or are in correspondence are rendered the same reference numeral regardless of the figure number.

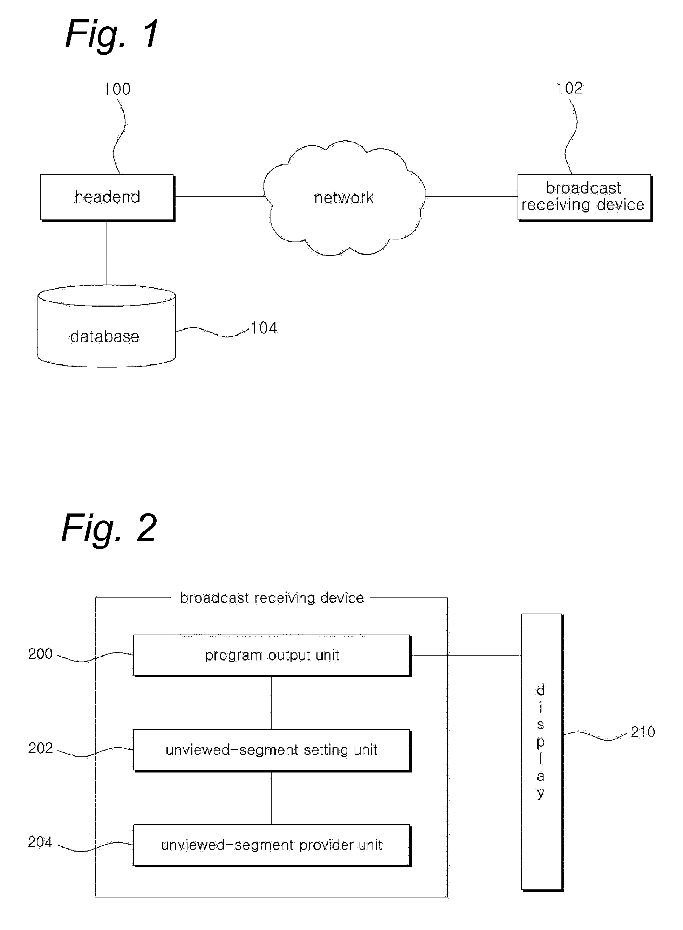

FIG. 1 illustrates the composition of a system for providing broadcast services according to an embodiment of the invention.

As illustrated in FIG. 1, a system for providing broadcast services according to this embodiment can include a headend (broadcast transmission system) 100 and a broadcast receiving device 102 connected with the headend 100 over a network.

The headend 100 may provide live programs or on-demand programs according to a preset schedule.

The headend 100 may convert audio and video signals (AV signals) for various broadcast channels into a preset format, and may transmit the converted broadcast signals to the broadcast receiving device 102.

Also, the headend 100 may receive AV data for on-demand programs and other information related to the on-demand programs from multiple content providers and may store them in a database 104.

Here, examples of an on-demand program can include movies, music videos, children serials, etc., and can also include live programs that were registered after being aired in real time.

The broadcast receiving device 102 according to this embodiment may receive broadcast signals, including video, audio, and data, from the headend 100, and may decode and output the signals.

The broadcast receiving device 102 according to this embodiment can be a typical TV set or a set-top box, but is not thus limited, and can encompass any device capable of receiving broadcast signals, including a smart phone, a tablet PC, a desktop PC, etc.

The descriptions that follow will be provided using an example in which the broadcast receiving device 102 is a set-top box connected to a TV set that serves as a display unit.,

The broadcast receiving device 102 according to this embodiment may include a signal input interface that is equipped with a tuner and a channel decoder. The tuner may receive broadcast signals in a compressed form, and the channel decoder may extract the channel desired by the user from among the received broadcast signals.

The compressed (encoded) broadcast signals can be composed as complex signals that include at least one of video, audio, and data, and may be extracted and separated by a demux to be outputted to a signal output interface.

The signal output interface can include an audio decoder, a video decoder, and a data decoder, and the signals separated at the demux can pass through the respective decoders to be outputted to the display unit.

Based on the composition described above, the broadcast receiving device 102 may process a live program provided on a channel requested by the user, so that it may be outputted to the display unit.

An embodiment of the invention can provide a replay service for a live program that is selective to the portion that was not viewed by the user (hereinafter referred to as an "unviewed segment").

According to this embodiment, if the user begins viewing a live program at a first time point that is between the starting point and the end point of the live program, then the system for providing broadcast services according to this embodiment may provide a replay service selectively for only the unviewed segment from the starting point to the first time point.

Also, if the user only views the program from the starting point to a first time point, then the system for providing broadcast services may provide a replay service for the unviewed segment from the first time point to the end point.

Furthermore, if the user could not view the program from a first time point to a second time point, both of which are between the starting point and the end point of the live program, then the replay service may be provided for the corresponding unviewed segment.

According to an embodiment of the invention, the unviewed segment replay service can be provided under various options.

For example, the broadcast receiving device 102 can output an unviewed-segment request menu to the user, after a live program has ended.

According to this embodiment, the items on the unviewed-segment request menu can include at least one of paid viewing of the unviewed segment, free viewing of the unviewed segment, replay after advertisement, and show different channel providing the live program.

The paid viewing of the unviewed segment refers to providing an unviewed segment on the condition that a particular fee is paid. According to an embodiment of the invention, the charge for the unviewed segment can be determined in proportion to the length of the unviewed segment.

If the paid viewing is selected by the user, once the user's payment is completed, the unviewed segment can be provided immediately or can be recorded on the broadcast receiving device 102.

The free viewing option refers to providing an unviewed segment when the replay for the live program is changed from a charged to a free-of-charge viewing.

The replay after advertisement option refers to providing an unviewed segment with the prerequisite that the user views an advertisement.

The show different channel option refers to informing the user of another channel on which the live program is provided, so that the user can change to the corresponding channel.

An unviewed segment can be designated by the user, but the invention is not thus limited. That is, the unviewed segments can be stored by the broadcast receiving device 102, which may monitor the time points at which the channels of live programs are shown.

According to this embodiment, the replay service can be provided for an unviewed segment under various options, thus reducing the burden on the user while also garnering profits for the businesses.

A more detailed description is provided below, with reference to the accompanying drawings, of an unviewed-segment replay service according to an embodiment of the invention.

FIG. 2 illustrates the detailed composition of a broadcast receiving device according to an embodiment of the invention.

As illustrated in FIG. 2, a broadcast receiving device 102 according to this embodiment can include a program output unit 200, an unviewed-segment setting unit 202, and an unviewed-segment provider unit 204.

The program output unit 200 may output the live programs received from the headend 100 to the display unit 210.

As described above, the program output unit 200 can include a signal input interface that includes a tuner and a channel decoder, a demux, and decoders. The program output unit 200 may extract program-related audio/video data as well as other program-related information, process the data and information and output them to the display unit 210.

The unviewed-segment setting unit 202 may store information on unviewed segments of live programs.

Here, the unviewed-segment information can include a live program identifier and the starting point and end point of an unviewed segment.

According to an embodiment of the invention, the unviewed-segment setting unit 202 can monitor whether or not the user changes channels to store the unviewed-segment information.

If there is a channel change, the unviewed-segment setting unit 202 may compare the time point of the channel change with the degree of progression of a live program.

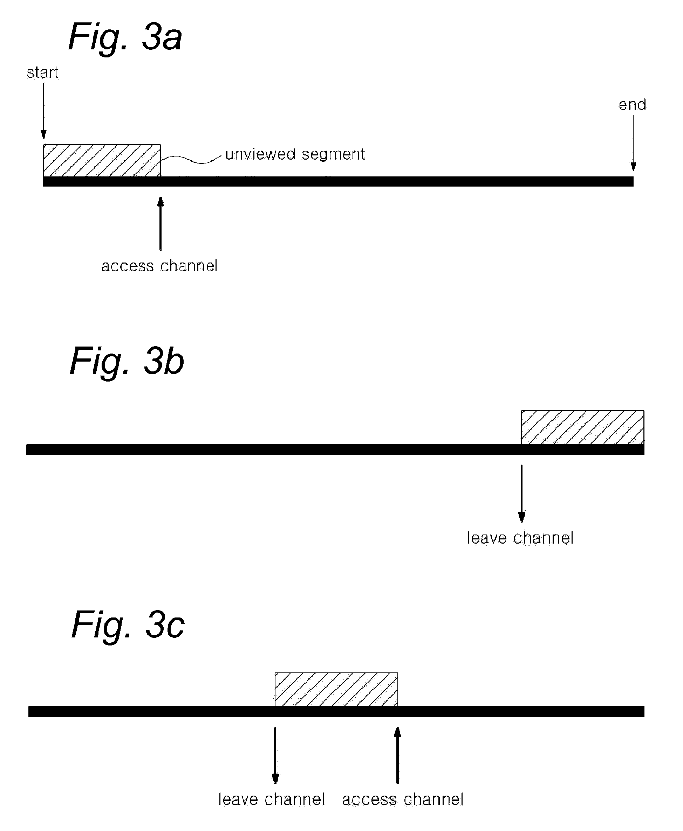

FIGs. 3A to 3C illustrate unviewed segments resulting from changing channels according to an embodiment of the invention.

As illustrated in FIG. 3A, if the corresponding channel is accessed after a live program has already started, then the unviewed-segment setting unit 202 may store the starting point of the live program and the time point at which the channel was accessed as the unviewed-segment information. Here, the time point at which the channel was accessed would be the end point of the unviewed segment.

As illustrated in FIG. 3B, if a live program is watched from the starting point up to a particular time point at which the channel is changed, then the unviewed-segment setting unit 202 may store the time point at which the channel was left and the end point of the live program, where the time point at which the channel was left would be the starting point of the unviewed segment.

As illustrated in FIG. 3C, if while viewing a live program the channel is left at a particular time point and the channel is accessed again afterwards, then the unviewed-segment setting unit 202 may store the time point at which the channel is left and the time point at which the channel is accessed. Here, the time point at which the channel is left would be the starting point of the unviewed segment, while the time point at which the channel is accessed would be the end point of the unviewed segment.

Preferably, the automatic storing of unviewed-segment information in accordance with channel changes can be performed in cases where the user has requested an unviewed-segment replay service beforehand.

For example, the user can preset an unviewed-segment replay for a particular live program, and the unviewed-segment setting unit 202 may monitor the preset live program, as regards whether there is a channel change, to store the unviewed segment information.

According to this embodiment, the unviewed segment can be personally set by the user.

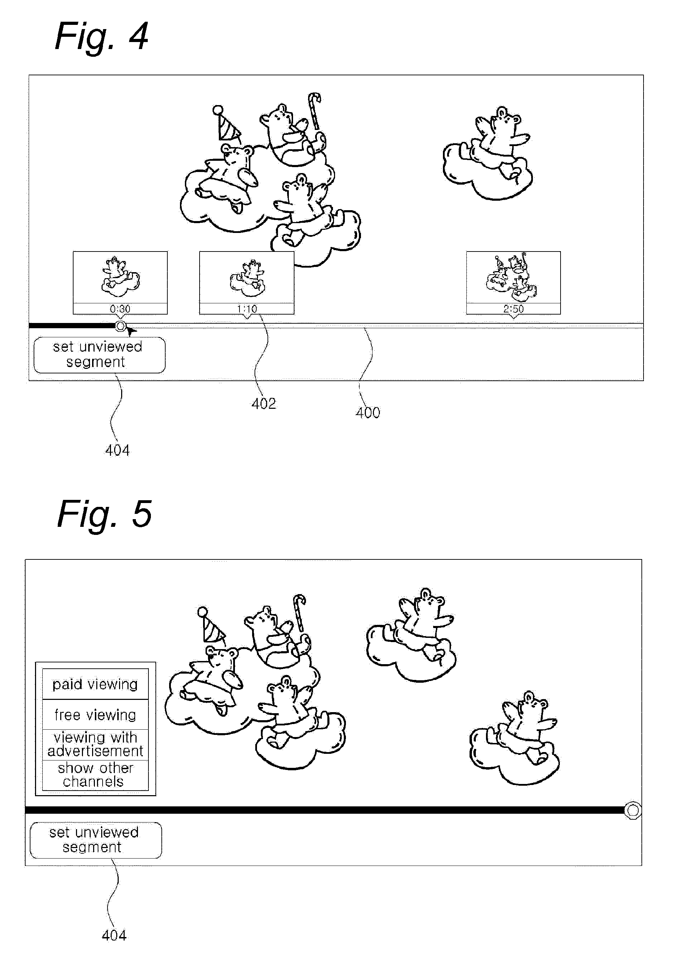

FIG. 4 illustrates a user interface for setting an unviewed segment according to an embodiment of the invention.

As illustrated in FIG. 4, a user interface according to this embodiment can include a play bar 400 that displays the degree of progression of a live program and a multiple number of thumbnails 402.

If the user selects the set unviewed segment icon 404 and then selects at least two thumbnails, then the time point corresponding to the former thumbnail may be stored as the starting point of the unviewed segment, while the time point corresponding to the latter thumbnail may be stored as the end point of the unviewed segment.

Although FIG. 4 illustrates an example in which thumbnails are used for setting the unviewed segment, it is also possible to select the starting point and end point of the unviewed segment on the play bar 400 without the use of thumbnails.

The unviewed-segment provider unit 204 according to this embodiment may output an unviewed-segment request menu that includes multiple items, as illustrated in FIG. 5, after the end of a live program.

An unviewed-segment request menu according to this embodiment can include at least one of paid viewing of the unviewed segment, free viewing of the unviewed segment, replay after advertisement, and show different channel providing the live program.

The unviewed-segment provider unit 204 may provide the unviewed-segment replay service according to the option selected by the user from the menu described above.

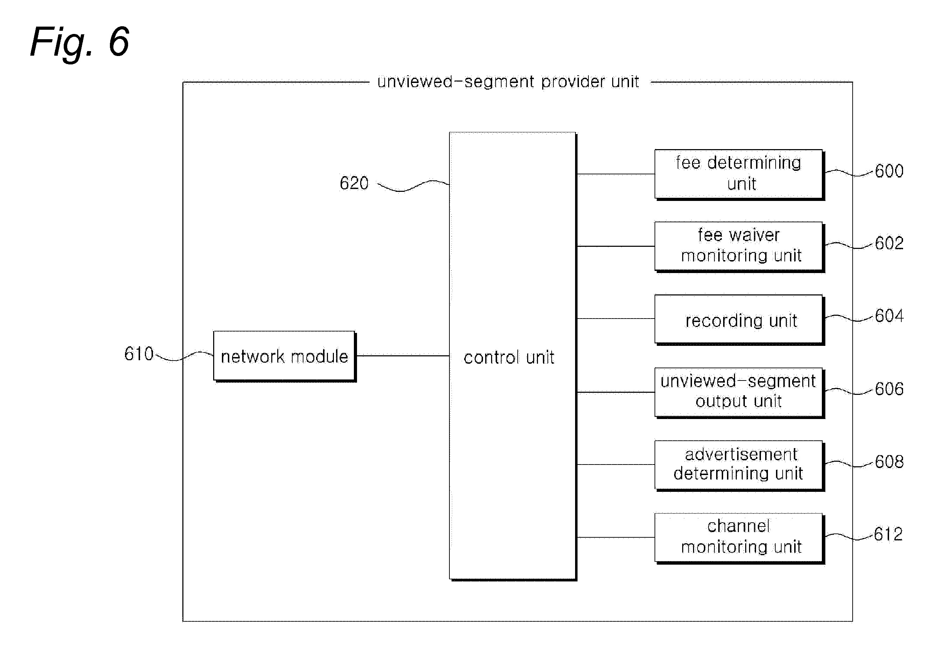

FIG. 6 illustrates the detailed composition of an unviewed-segment provider unit according to an embodiment of the invention.

As illustrated in FIG. 6, an unviewed-segment provider unit 204 according to this embodiment can include a fee determining unit 600, a fee waiver monitoring unit 602, a recording unit 604, an unviewed-segment output unit 606, an advertisement determining unit 608, a network module 610, a channel monitoring unit 612, and a control unit 620.

The fee determining unit 600 may determine the fee for the unviewed segment replay if the user opts for the paid viewing of an unviewed segment.

According to this embodiment, the fee determining unit 600 can determine the fee in proportion to the length of the unviewed segment. That is, the replay of the unviewed segment may be enabled when the user pays a fee not for the entire live program, but only for the portion which the user did not watch.

Preferably, the fee according to this embodiment can be classified into a preset number. For example, if the replay of an entire live program is priced at KRW 1000, the fee for an unviewed segment can be classified into 10 price levels from KRW 100 to KRW 1000 in increments of KRW 100, and the fee determining unit 600 can determine the fee to be one of the price levels from KRW 100 to KRW 1000 according to the length of the unviewed segment.

The fee determined as above may be outputted on the display unit 210, and if the user's payment is completed, the network module 610 may request the unviewed segment from the headend 100, and the unviewed-segment output unit 606 may output the unviewed segment received from the headend 100.

While the unviewed segment can be provided by an on-demand method as described above, when the user completes the payment, the recording unit 604 can perform the relevant recording, and the unviewed segment can be outputted upon the user's request.

The fee waiver monitoring unit 602 may monitor whether or not the replay of the live program is made free of charge, if the user opts for the free viewing of the unviewed segment.

Generally, in providing a replay service, the time point at which a content is made free of charge can be set beforehand to a week, and the fee waiver monitoring unit 602 may decide whether or not a preset period of time has passed after the live program has ended.

If the period has passed, the network module 610 may request the unviewed segment from the headend 100, and the recording unit 604 may record the unviewed segment.

According to an embodiment of the invention, an unviewed segment that was recorded after it was made free of charge can be outputted by the unviewed-segment output unit 606 at a time point before the next episode of the live program is provided.

For example, if an unviewed segment (lasting ten minutes) is recorded for the n-th episode of a live program that starts at 10 p.m., the unviewed-segment output unit 606 can inquire whether or not the unviewed segment is to be watched ten minutes before the beginning of the (n+1)-th episode of the live program, and if the user accepts, can output the unviewed segment.

If the user selects the replay after advertisement option, the advertisement determining unit 608 may decide on an advertisement that is to be provided before or during the output of the unviewed segment.

The replay after advertisement option is to induce the user to view an advertisement instead of being provided the unviewed segment for free. The advertisement determining unit 608 according to this embodiment may determine at least one of a type, position, and number of the advertisement that is to be provided.

Preferably, the number of advertisements can be determined differently according to the length of the unviewed segment, and in order to increase the efficiency of the advertisement, the position of the advertisement can also be varied.

Here, the position of the advertisement may relate to the time point at which the advertisement is outputted. The position of the advertisement can be generally determined to be before providing the unviewed segment but is not thus limited, and can also be determined to be at a particular point in the unviewed segment.

Also, if it is determined that multiple advertisements are to be provided, then the position of each advertisement can be determined differently. For example, a first advertisement can be shown before outputting the unviewed segment, while a second advertisement can be shown at a time point in the middle of the unviewed segment.

The channel monitoring unit 612 may monitor whether or not a live program that has ended at present is provided on other channels if the user selects the show other channels option, and may output a notification message if it is provided on another channel.

Preferably, the channel monitoring unit 612 can output the notification message at the time point at which the unviewed segment begins.

The control unit 620 may control each component in such a manner that enables the viewing of the unviewed segment according to this embodiment.

In the foregoing, the process for providing an unviewed segment is described as being provided by the broadcast receiving device 102.

According to another preferred embodiment of the invention, the process for providing an unviewed segment can be performed at the headend 100 according to a request from the broadcast receiving device 102.

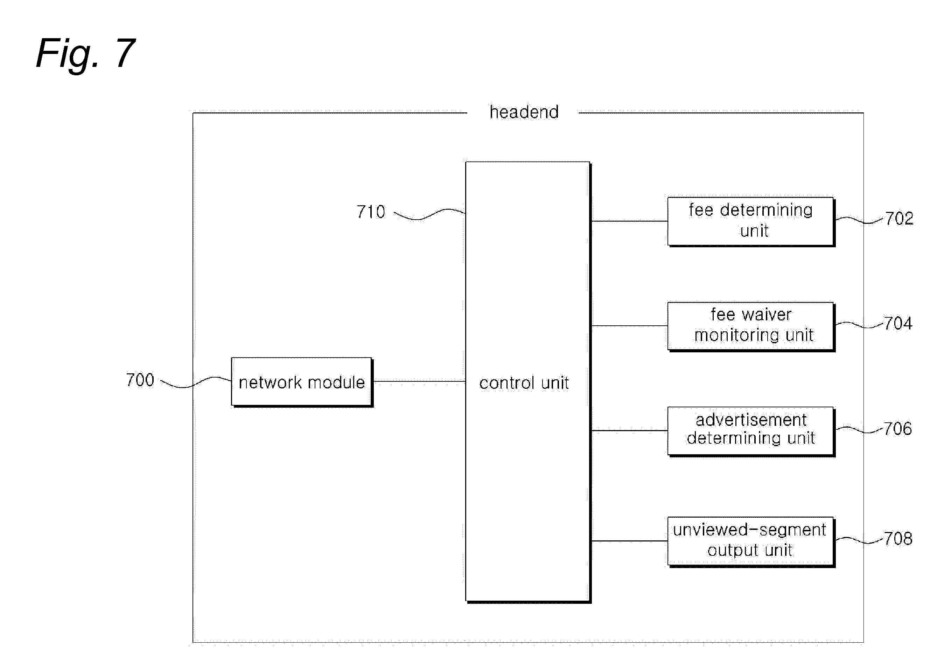

FIG. 7 illustrates the composition of a headend according to another embodiment of the invention.

As illustrated in FIG. 7, a headend 100 according to this embodiment can include a network module 700, a fee determining unit 702, a fee waiver monitoring unit 704, an advertisement determining unit 706, and an unviewed-segment output unit 708.

When a user requests an unviewed segment replay, the network module 700 may receive the user selection information regarding the unviewed segment replay from the broadcast receiving device 102.

The selection information can include a broadcast receiving terminal identifier, a live program identifier, unviewed-segment information, and replay type information.

Here, the replay type information can include information by which to distinguish one of a paid viewing, a free viewing, and a replay after advertisement.

The selection information may be stored in a storage unit (not shown).

If the replay type information indicates a paid viewing, the fee determining unit 702 may determine a fee corresponding to the length of the unviewed segment. The fee thus determined may be transmitted to the broadcast receiving device 102, and when the payment is completed at the broadcast receiving device 102, the unviewed-segment output unit 708 may extract the unviewed segment from the live program. The extracted unviewed segment may be transmitted via the network module 700 to the broadcast receiving device 102.

If the replay type is the free viewing, the fee waiver monitoring unit 704 may monitor the occurrence of a fee waiver for the live program.

When the live program is made free of charge, the unviewed-segment output unit 708 may extract the unviewed segment, which may be transmitted via the network module 700 to the broadcast receiving device 102. Here, the transmitting of the unviewed segment can be performed before the next episode of the live program is provided.

If the replay type is the replay after advertisement, the advertisement determining unit 706 may determine the type, position, and number of the advertisement that will be provided before or during the viewing of the unviewed segment.

The advertisement information thus determined may be transmitted together with the unviewed segment to the broadcast receiving device 102 via the network module 700.

The broadcast receiving device 102 may output the received advertisement before or during the output of the unviewed segment.

The control unit 710 may control each component in such a manner that enables the viewing of the unviewed segment according to this embodiment.

According to another preferred embodiment of the invention, the entire program, including the unviewed segment, can be provided with the prerequisite that the user views an advertisement.

Here, the program can be a live program of which the real time airing has ended, but the invention is not thus limited.

More specifically, a broadcast receiving device 102 according to an embodiment of the invention can receive a replay request from the user after a program has ended.

Preferably, the broadcast receiving device 102 can output a replay menu after the end of the program. More preferably, the replay menu can include a replay after advertisement menu.

If the user selects a replay, the broadcast receiving device 102 may output a preset number of advertisements.

Here, the broadcast receiving device 102 can determine the type, number, etc., of the advertisements by using the type of the program, the overall play time of the program, and the like, and may output the advertisements thus determined.

After the user finishes viewing the advertisements, the broadcast receiving device 102 may output the program. Here, the outputted program can be the user's unviewed segment, but also can be the entire live program a portion of which contains the unviewed segment.

The unviewed-segment replay service described above can be implemented in the form of program instructions that may be performed using various computer means and can be recorded in a computer-readable medium. Such a computer-readable medium can include program instructions, data files, data structures, etc., alone or in combination. The program instructions recorded on the medium can be designed and configured specifically for the present invention or can be a type of medium known to and used by the skilled person in the field of computer software.

Examples of a computer-readable medium may include magnetic media such as hard disks, floppy disks, magnetic tapes, etc., optical media such as CD-ROM's, DVD's, etc., magneto-optical media such as floptical disks, etc., and hardware devices specially configured to store and execute program instructions such as ROM, RAM, flash memory, etc.

The recorded medium can also be a transmission medium, such as optical rays, metal wires, waveguides, etc., that transports carrier waves for transmitting signals which designate the program instructions, data structures, etc.

Examples of the program of instructions may include not only machine language codes produced by a compiler but also high-level language codes that can be executed by a computer through the use of an interpreter, etc. The hardware mentioned above can be made to operate as one or more software modules that perform the actions of the embodiments of the invention, and vice versa.

While the present invention has been described above using particular examples, including specific elements, by way of limited embodiments and drawings, it is to be appreciated that these are provided merely to aid the overall understanding of the present invention, the present invention is not to be limited to the embodiments above, and various modifications and alterations can be made from the disclosures above by a person having ordinary skill in the technical field to which the present invention pertains. Therefore, the spirit of the present invention must not be limited to the embodiments described herein, and the scope of the present invention must be regarded as encompassing not only the claims set forth below, but also their equivalents and variations.

## Claims

1. An apparatus for providing a replay service for an unviewed segment of a live program, the apparatus comprising:
an unviewed-segment setting unit configured to store information on an unviewed segment of a live program; and
an unviewed-segment provider unit configured to output an unviewed-segment request menu after an end of the live program and to output an unviewed segment according to information on a user selection on the menu,
wherein the unviewed-segment request menu includes at least one of paid viewing of the unviewed segment, free viewing of the unviewed segment, replay after advertisement, and show different channel providing the live program.

2. The apparatus of claim 1, wherein the unviewed-segment provider unit comprises:
a fee determining unit configured to determine a fee in proportion with a length of the unviewed segment.

3. The apparatus of claim 1, wherein, if the user selects the paid viewing of the unviewed segment, the information on the user selection is transmitted to a headend connected by a network with the apparatus, and the headend determines a fee corresponding to a length of the unviewed segment, and if a payment of the fee is completed, transmits the unviewed segment to the apparatus.

4. The apparatus of claim 1, wherein the unviewed-segment provider unit comprises:
a monitoring unit configured to monitor a time point at which the live program is made free of charge; and
a recording unit configured to record the unviewed segment at the time point at which the live program is made free of charge.

5. The apparatus of claim 4, wherein the live program is a series type program composed of a plurality of episodes, and the unviewed-segment provider unit comprises:
an unviewed-segment output unit configured to output the recorded unviewed segment before a time point at which a next episode of the live program is provided.

6. The apparatus of claim 1, wherein, if the user selects the free viewing of the unviewed segment, the information on the user selection is transmitted to a headend connected by a network with the apparatus, and the headend transmits the unviewed segment to the apparatus at a time point at which the unviewed segment is made free of charge.

7. The apparatus of claim 1, wherein the unviewed-segment provider unit comprises:
an advertisement determining unit configured to determine at least one of a type, position, and number of the advertisement to be provided in correspondence to a length of the unviewed segment if the user selects the replay after advertisement.

8. The apparatus of claim 1, wherein the unviewed-segment provider unit comprises:
an advertisement determining unit configured to determine at least one of a type, position, and number for the advertisement to be provided to the user if the user selects the replay after advertisement, and
when the user finishes viewing the advertisement, the unviewed-segment provider unit outputs the entire live program including the unviewed segment.

9. The apparatus of claim 1, wherein, if the user selects the replay after advertisement, the information on the user selection is transmitted to a headend connected by a network with the apparatus, and the headend determines at least one of a type, position, and number of the advertisement to be provided in correspondence to a length of the unviewed segment and transmits the determined advertisement information to the apparatus.

10. The apparatus of claim 1, wherein the unviewed-segment provider unit comprises:
a channel monitoring unit configured to monitor whether or not the unviewed segment of the live program is provided on another channel and to output a notification message if the unviewed segment is provided on another channel.

11. The apparatus of claim 1, wherein the unviewed-segment setting unit outputs a user interface for setting an unviewed segment and stores information on the unviewed segment by using information on a user selection on the user interface, and
the user interface includes at least one of a play bar for displaying a degree of progression of the live program, one or more thumbnails, and an unviewed-segment request icon.

12. A method for providing a replay service for an unviewed segment at a broadcast receiving device connected over a network with a broadcast transmission system, the method comprising:
storing information on an unviewed segment of a live program;
outputting an unviewed-segment request menu after an end of the live program;
receiving user selection information on the menu; and
outputting an unviewed segment according to the user selection information,
wherein the unviewed-segment request menu includes at least one of paid viewing of the unviewed segment, free viewing of the unviewed segment, replay after advertisement, and show different channel providing the live program.

13. A method for providing a replay service for an unviewed segment at a broadcast transmission system connected over a network with a broadcast receiving device, the method comprising:
transmitting a live program to the broadcast receiving device;
receiving a user's selection information for requesting an unviewed segment after an end of the live program; and
extracting an unviewed segment corresponding to the user selection information and transmitting the unviewed segment to the broadcast receiving device,
wherein the user selection information includes at least one of a broadcast receiving terminal identifier, a live program identifier, unviewed segment information, and replay type information, and
the replay type information includes at least one of paid viewing of the unviewed segment, free viewing of the unviewed segment, replay after advertisement, and show different channel providing the live program.

14. A recorded medium readable by a computer, tangibly embodying a program of instructions for executing the method of either claim 12 or claim 13.
